(19)

Europäisches
Patentamt
European
Patent Office
Office européen
des brevets

(11) EP 2 913 780 A2

## (12) EUROPEAN PATENT APPLICATION

(43) Date of publication:
02.09.2015 Bulletin 2015/36

(51) Int Cl.:
*G06K 9/62* (2006.01)  *G06K 9/00* (2006.01)

(21) Application number: 15156806.0

(22) Date of filing: 26.02.2015

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 28.02.2014 CN 201410073496

(71) Applicant: Xiaomi Inc.
Beijing 100085 (CN)

(72) Inventors:
• CHEN, Zhijun
100085 BEIJING (CN)
• ZHANG, Tao
100085 BEIJING (CN)
• WANG, Lin
100085 BEIJING (CN)

(74) Representative: Delumeau, François Guy et al
Cabinet Beau de Loménie
158, rue de l'Université
75340 Paris Cedex 07 (FR)

## (54) CLUSTERING METHOD, APPARATUS AND TERMINAL APPARATUS

(57) A clustering method, apparatus and a terminal apparatus are provided. The method comprises: obtaining (S100) each neighbor object of an object to be visited; determining (S200) whether at least one neighboring domain in which a number of the neighbor objects is larger than or equal to a predetermined value exists, wherein the object to be visited has a plurality of neighboring domains; clustering (S300) the object to be visited into a first group, if it is determined that the at least one neighboring domain in which the number of the neighbor projects is larger than the predetermined value exists; and performing (S400) an expanded clustering on directly density-reachable neighbor objects in a predetermined neighboring domain of the object to be visited until no more neighbor objects are available to enter the first group.

```
                                                    ┌─ S100
   ┌────────────────────────────────────────────┐
   │ obtaining each neighbor object of an object │
   │            to be visited                    │
   └────────────────────────────────────────────┘
                       │
                       ▼
              Determining                    ┌─ S200
     whether at least one neighboring domain in
     which a number of the neighbor objects is larger    No
     than or equal to a predetermined
              value exists
                       │ Yes
                       ▼                     ┌─ S300
   ┌────────────────────────────────────────────┐
   │ clustering the object to be visited into a  │
   │            first group                      │
   └────────────────────────────────────────────┘
                       │                     ┌─ S400
                       ▼
   ┌────────────────────────────────────────────┐
   │ performing an expanded clustering on directly density-│
   │ reachable neighbor objects in a predetermined neighboring│
   │ domain of the object to be visited until no more neighbor│
   │ objects are available to enter the first group │
   └────────────────────────────────────────────┘
```

Fig. 1

**Description**

**FIELD**

Embodiments of the present disclosure generally relate to computer technology, and more particularly, to a clustering method, apparatus and a terminal apparatus.

**BACKGROUND**

Clustering is a process to divide a set of physical or abstract objects into a plurality of groups of analogous objects, i.e., a process to divide the objects into different groups or clusters, in which the objects in a same group have large similarities and the objects in different groups have large differences.

There are many types of clustering methods, in which a difference of the clustering method based on density from other clustering methods is that it is based on the density instead of various distances and as long as the density of dots in a domain is larger than a predetermined threshold, the domain is added into a similar group. Thus, a clustering defect that the clustering method based on distance can only find a "quasi-circular" group can be overcome. For example, DBSCAN (Density-Based Spatial Clustering of Applications with Noise) algorithm is a typical algorithm of the clustering methods based on density. The DBSCAN algorithm defines the cluster as a maximum set of dots having connected densities, which can divide the domain having a high enough density into the cluster and find the cluster of any shape in a spatial database of noise. The DBSCAN algorithm introduces a concept of core object and two initial parameters Eps (scanning radius) and MinPts (minimum number of contained dots). If a number of objects in a range of Eps around a certain object is larger or equal to MinPts, the certain object is a core object. The core object and the neighbor objects in the range of Eps around the core object form a cluster. If there are a plurality of core objects in the cluster, the clusters centered on these core objects shall be combined together. However, a clustering result of this clustering method is very sensitive to values of the parameters Eps and MinPts, i.e., different clustering results may be caused due to different values of Eps and MinPts, thus resulting in an indeterminacy of the clustering result.

**SUMMARY**

According to a first aspect, the invention relates to a clustering method, comprising:

obtaining each neighbor object of an object to be visited;
determining whether at least one neighboring domain in which a number of the neighbor objects is larger than or equal to a predetermined value exists, wherein the object to be visited has a plurality of neighboring domains;
clustering the object to be visited into a first group, if it is determined that the at least one neighboring domain in which the number of the neighbor projects is larger than the predetermined value exists; and
performing an expanded clustering on directly density-reachable neighbor objects in a predetermined neighboring domain of the object to be visited until no more neighbor objects are available to enter the first group.

In the context of the invention, "visiting an object" means "clustering an object"; or in other words, processing an object according to the invention.

In a particular embodiment, the step of determining whether at least one neighboring domain in which a number of the neighbor objects is larger than or equal to a predetermined value exists comprises:

obtaining a distance between a neighbor object and the object to be visited;
determining whether the number of the neighbor objects in a first neighboring domain is larger than or equal to the predetermined value according to the distance in an ascending sequence of scanning radiuses of the plurality of neighboring domains;
determining the object to be visited as a core object, if the number of the neighbor objects in the first neighboring domain is larger than or equal to the predetermined value;
determining whether each of the plurality of neighboring domains of the object to be visited has been determined, if the number of the neighbor objects in the first neighboring domain is less than the predetermined value;
determining whether the number of the neighbor objects in a second neighboring domain is larger than or equal to the predetermined value according to the distance in the ascending sequence of scanning radiuses of the plurality of neighboring domains, if not all the plurality of neighboring domains of the object to be visited have been determined; and
determining the object to be visited not as the core object, if each of the plurality of neighboring domains of the object to be visited has been determined.

In a particular embodiment, the step of determining whether at least one neighboring domain in which a number of the neighbor objects is larger than or equal to a predetermined value exists comprises:

> obtaining a distance between a neighbor object and the object to be visited;
> obtaining a weight coefficient corresponding to distance, in which the weight coefficient is associated with the distance;
> calculating the number of neighbor objects in a first neighboring domain according to the distance and the corresponding weight coefficient;
> determining whether the number of the neighbor objects in the first neighboring domain is larger than or equal to the predetermined value in an ascending sequence of scanning radiuses of the plurality of neighboring domains;
> determining the object to be visited as a core object, if the number of the neighbor objects in the first neighboring domain is larger than or equal to the predetermined value;
> determining whether each of the plurality of neighboring domains of the object to be visited has been determined, if the number of the neighbor objects in the first neighboring domain is less than the predetermined value;
> determining whether the number of the neighbor objects in a second neighboring domain is larger than or equal to the predetermined value according to the distance in the ascending sequence of scanning radiuses of the plurality of neighboring domains, if not all the plurality of neighboring domains of the object to be visited have been determined; and
> determining the object to be visited not as the core object, if each of the plurality of neighboring domains of the object to be visited has been determined.

In a particular embodiment, the step of obtaining a corresponding weight coefficient associated with the distance comprises:

> obtaining a correspondence between the distance from the neighbor object and the object o be visited and a probability whether the neighbor object is the same with the object to be visited;
> obtaining the probability whether the neighbor object is the same with the object to be visited corresponding to the distance by querying the correspondence; and
> obtaining the corresponding weight coefficient associated with the distance by multiplying the distance and the probability, in which the weight coefficient is in a positive correlation with the probability.

In a particular embodiment, the step of performing an expanded clustering on directly density-reachable neighbor objects in a predetermined neighboring domain of the object to be visited until no more neighbor objects enter the first group comprises:

> obtaining each directly density-reachable neighbor object in the predetermined neighboring domain of the object to be visited, in which the scanning radius of the predetermined neighboring domain is less than a maximum scanning radius of the plurality of neighboring domains;
> determining whether each directly density-reachable neighbor object is the core neighbor one by one;
> adding the neighbor objects in the predetermined neighboring domain in which the directly density-reachable neighbor object is into the first group until no more neighbor objects are available to enter the first group, if it is determined that the directly density-reachable neighbor object is the core object.

In a particular embodiment, the step of determining whether each directly density-reachable neighbor objects are the core neighbors one by one comprises:

> determining whether at least one neighboring domain in which the number of the neighbor objects is larger than the predetermined value exists in the plurality of neighboring domains of the directly density-reachable neighbor object;
> determining the directly density-reachable neighbor object as the core object, if the number of the neighbor objects is larger than or equal to the predetermined value; and
> determining the directly density-reachable neighbor object not as the core object, if the number of the neighbor objects in each of the plurality of neighboring domains of the directly density-reachable neighbor object is less than the predetermined value.

In a particular embodiment, the step of determining whether the number of the neighbor objects in a first neighboring domain is larger than or equal to the predetermined value according to the distance in an ascending sequence of scanning radiuses of the plurality of neighboring domains comprises:

sequencing the distances between each neighbor object and the object to be visited and obtaining a sequence of the distances;

counting a number of the neighbor objects having the distance with respect to the object to be visited less than the scanning radius of the neighboring domain according to the sequence of the distances; and

determining whether the number of the neighbor objects having the distance with respect to the object to be visited less than the scanning radius of the neighboring domain is less than or equal to the predetermined value.

According to a a second aspect, the invention relates to a clustering apparatus, comprising:

a first obtaining module, configured to obtain each neighbor object of an object to be visited;

a first judging module configured to determine whether at least one neighboring domain in which a number of the neighbor projects is larger than or equal to a predetermined value exists, wherein the object to be visited has a plurality of neighboring domains;

a clustering module, configured to cluster the object to be visited into a first group, if it is determined that the at least one neighboring domain in which the number of the neighbor projects is larger than the predetermined value exists; and

an expanded clustering module, configured to perform an expanded clustering on directly density-reachable neighbor objects in a predetermined neighboring domain of the object to be visited until no more neighbor objects are available to enter the first group.

In a particular embodiment, the first judging module comprises:

a first obtaining sub-module, configured to obtain a distance between a neighbor object and the object to be visited;

a first judging sub-module, configured to determine whether the number of the neighbor objects in a first neighboring domain is larger than or equal to the predetermined value according to the distance in an ascending sequence of scanning radiuses of the plurality of neighboring domains;

a first determining sub-module, configured to determine the object to be visited as a core object, if the number of the neighbor objects in the first neighboring domain is larger than or equal to the predetermined value;

a second judging sub-module, configured to determine whether each of the plurality of neighboring domains of the object to be visited has been determined, if the number of the neighbor objects in the first neighboring domain is less than the predetermined value, to make the first judging sub-module to determine whether the number of the neighbor objects in a second neighboring domain is larger than or equal to the predetermined value according to the distance in the ascending sequence of scanning radiuses of the plurality of neighboring domains, if not all the plurality of neighboring domains of the object to be visited have been determined; and

a second determining sub-module, configured to determine the object to be visited not as the core object, if each of the plurality of neighboring domains of the object to be visited has been determined.

In a particular embodiment, the first judging module comprises:

a second obtaining sub-module, configured to obtain a distance between a neighbor object and the object to be visited;

a third obtaining sub-module, configured to obtain a weight coefficient corresponding to the distance, in which the weight coefficient is associated with the distance;

a calculating sub-module, configured to calculate the number of neighbor objects in a first neighboring domain according to the distance and the corresponding weight coefficient;

a third judging sub-module, configured to determine whether the number of the neighbor objects in the first neighboring domain is larger than or equal to the predetermined value in an ascending sequence of scanning radiuses of the plurality of neighboring domains;

a third determining sub-module, configured to determine the object to be visited as a core object, if the number of the neighbor objects in the first neighboring domain is larger than or equal to the predetermined value;

a fourth judging sub-module, configured to determine whether each of the plurality of neighboring domains of the object to be visited has been determined, if the number of the neighbor objects in the first neighboring domain is less than the predetermined value, to make the calculating sub-module to calculate the number of the neighbor objects in a second neighboring domain according to the distance and the corresponding weight coefficient, if not all the plurality of neighboring domains of the object to be visited have been determined; and

a fourth determining sub-module, configured to determine the object to be visited not as the core object, if each of the plurality of neighboring domains of the object to be visited has been determined.

In a particular embodiment, the third obtaining sub-module comprises:

a counting sub-module, configured to obtain a correspondence between the distance from the neighbor object and the object o be visited and a probability whether the neighbor object is the same with the object to be visited;

a querying sub-module , configured to query the correspondence to obtain the probability whether the neighbor object is the same with the object to be visited corresponding to the distance; and

a fourth obtaining module, configured to obtain the corresponding weight coefficient associated with the distance by multiplying the distance and the probability, in which the weight coefficient is in a positive correlation with the probability.

In a particular embodiment, the expanded clustering module comprises:

a fifth obtaining sub-module, configured to obtain each directly density-reachable neighbor object in the predetermined neighboring domain of the object to be visited, in which the scanning radius of the predetermined neighboring domain is less than a maximum scanning radius of the plurality of neighboring domains;

a fifth judging sub-module, configured to determine whether each directly density-reachable neighbor object is the core neighbor one by one; and

an expanded clustering sub-module, configured to add the neighbor objects in the predetermined neighboring domain in which the directly density-reachable neighbor object is into the first group until no more neighbor objects are available to enter the first group, if it is determined that the directly density-reachable neighbor object is the core object.

In a particular embodiment, the fifth judging sub-module comprises:

a sixth judging sub-module, configured to determine whether at least one neighboring domain in which the number of the neighbor objects is larger than the predetermined value exists in plurality of neighboring domains of the directly density-reachable neighbor object;

a fifth determining sub-module, configured to determine the directly density-reachable neighbor object as the core object, if the number of the neighbor objects is larger than or equal to the predetermined value; and

a sixth determining sub-module, configured to determine the directly density-reachable neighbor object not as the core object, if the number of the neighbor objects in each of the plurality of neighboring domains of the directly density-reachable neighbor object is less than the predetermined value.

In a particular embodiment, the first judging sub-module comprises:

a sequencing module, configured to sequence the distances between each neighbor object and the object to be visited and obtaining a sequence of the distances;

a second counting sub-module, configured to count a number of the neighbor objects having the distance with respect to the object to be visited less than the scanning radius of the neighboring domain according to the sequence of the distances; and

a seventh judging sub-module, configured to determine whether the number of the neighbor objects having the distance with respect to the object to be visited less than the scanning radius of the neighboring domain is less than or equal to the predetermined value.

According to a third aspect, the invention relates to a terminal apparatus, comprising:

a processor; and

a memory configured to store an executable instruction by the processor;

wherein the processor is configured to

obtain each neighbor objects of an object to be visited;

determine whether at least one neighboring domain in which a number of the neighbor objects is larger than or equal to a predetermined value exists, wherein the object to be visited has a plurality of neighboring domains of the object to be visited;

cluster the object to be visited into a first group, if it is determined that the at least one neighboring domain in which the number of the neighbor projects is larger than the predetermined value exists in the plurality of neighboring domains of the object to be visited; and

perform an expanded clustering on directly density-reachable neighbor objects in a predetermined neighboring domain of the object to be visited until no more neighbor objects are available to enter the first group.

The technical solutions provided by embodiments of the present disclosure have following advantageous effects. According to the clustering method, each neighbor object of the object to be visited is obtained, and it is determined that the at least one neighboring domain in which the number of the neighbor projects is larger than the predetermined value exists and the object to be visited is determined as the core object. The object to be visited is clustered into the first group, and the expanded clustering is performed on directly density-reachable neighbor objects in the predetermined neighboring domain of the object to be visited. If the directly density-reachable neighbor object is not the core object, the expanded clustering is stop and then a next object to be visited is determined until all the objects to be visited are clustered. Since the plurality of neighboring domains are used to determine whether the object to be visited is the core object in the clustering method, a limitation on Eps (scanning radius) and MinPts (minimum number of contained dots) is reduced. Thus, a sensibility of a clustering result to Eps and MinPts is decreased and an accuracy of the clustering result is improved.

In a particular embodiment, the steps of the clustering method are determined by computer program instructions.

Consequently, according to a fourth aspect, the invention is also directed to a computer program for executing the steps of a clustering method as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

It is to be understood that both the foregoing general description and the following detailed description are exemplary and explanatory only and are not restrictive of the disclosure, as claimed.

## BRIEF DESCRIPTION OF THE DRAWINGS

The accompanying drawings, which are incorporated in and constitute a part of this specification, illustrate embodiments consistent with the disclosure and, together with the description, serve to explain the principles of the disclosure.

Fig. 1 is a flow chart of a clustering method according to an exemplary embodiment of the present disclosure;

Fig. 2 is a schematic diagram of an object distribution according to an exemplary embodiment of the present disclosure;

Fig. 3 is a schematic diagram of a neighboring domain distribution according to an exemplary embodiment of the present disclosure;

Fig. 4 is a flow chart of step S400 according an exemplary embodiment of the present disclosure;

Fig. 5 is a flow chart of step S200 according an exemplary embodiment of the present disclosure;

Fig. 6 is a flow chart of step S200 according another exemplary embodiment of the present disclosure;

Fig. 7 is a flow chart of obtaining a weight coefficient according to an exemplary embodiment of the present disclosure;

Fig. 8 is a schematic diagram of a clustering apparatus according to an exemplary embodiment of the present disclosure;

Fig. 9 is a block diagram of an apparatus according to an exemplary embodiment of the present disclosure.

With above drawings, embodiments disclosed by the present disclosure have been presented and detailed descriptions will be provided in the following. These drawings are not intended to limit a scope of the present disclosure in any way, but to interpret an idea of the present disclosure for those skilled in the related art by referring to particular embodiments.

## DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the disclosure. Instead, they are merely examples of apparatuses and methods consistent with aspects related to the disclosure as recited in the appended claims.

Before derailed descriptions of embodiments of the present disclosure, concepts of following terms herein are introduced firstly.

E neighboring domain: a domain centered on a certain object and having a scanning radius E is called E neighboring domain of the object.

Core object: if a number of neighbor objects in an E domain of an object P is larger than or equal to a minimum contained object threshold MinPts, the object is called the core object.

Neighbor object: an object able to be connected with an object P directly is called a neighbor object of the object P.

Directly density-reachable: for a sample set, if a neighbor object Q is in an E neighboring domain of an object P and the object P is a core object, the object Q is directly density-reachable from the object P, i.e., a neighbor object of the object P in the E neighboring domain.

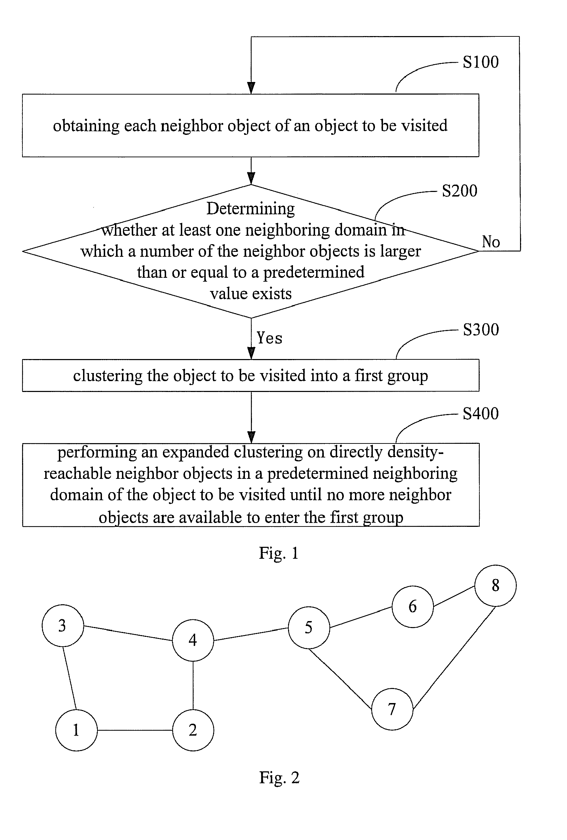

Fig. 1 is a flow chart of a clustering method according to an exemplary embodiment of the present disclosure. As shown in Fig. 1, the method comprises following steps.

In step S100, each neighbor object of an object to be visited is obtained.

The object in the clustering method of the present disclosure may be a facial image, and images belonging to a same person are clustered to form a cluster. Features in the facial image are transformed into a set of vectors, and thus a distance between two objects is a distance between the vectors. Certainly, the clustering method according to embodiments of the present disclosure may be applicable to other data apart from image.

For a set of objects to be processed, each object in the set is treated as the object to be visited and each neighbor object of the object to be visited is obtained. As shown in Fig. 2, object 5 is connected with objects 4, 6 and 7 directly and thus objects 4, 6 and 7 are neighbor objects of object 5.

A visiting identification is set for each object. If a certain object is visited, the visiting identification of the object is marked as visited. For example, if a certain object has not been visited, the corresponding vising identification is "0"; if the certain object has been visited, the corresponding visiting identification is "1". It is identified whether the object is the object to be visited according to the visiting identification of the object. It is determined whether the object is the object to be visited according to the visiting identification of the object.

In step S200, the object to be visited has a plurality of neighboring domains and it is determined whether at least one neighboring domain in which a number of the neighbor objects is larger than or equal to a predetermined value exists. This step is mainly used for determining whether the object to be visited is the core object. If yes, step S300 is executed; if not, the object to be visited is marked as a noise dot and then step S100 is executed to perform a next determination of the object to be visited until no more objects to be visited exist.

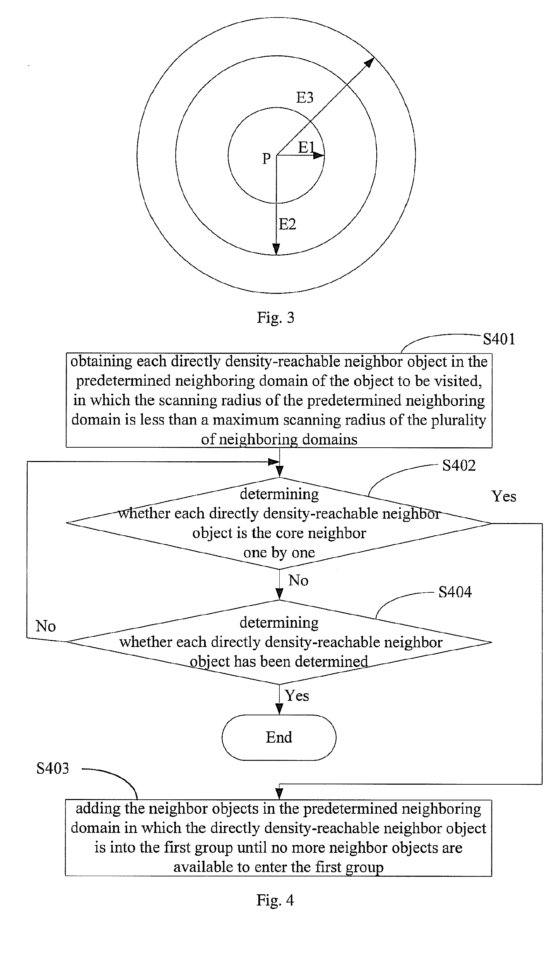

As shown in Fig. 3, three neighboring domains of the object to be visited are E1 neighboring domain, E2 neighboring domain and E3 neighboring domain. A scanning radius of E1 neighboring domain is E1, the scanning radius of E2 neighboring domain is E2 and the scanning radius of the E3 neighboring domain is E3, in which E1<E2<E3. It is determined whether a number $Pst1$ of neighbor objects in E1 neighboring domain of the object P to be visited is larger than or equal to MinPst1 first, and if $Pst1 \geq MinPst1$, it is determined that the object P to be visited is the core object; otherwise, it is further determined whether a number $Pst2$ of neighbor objects of the object P to be visited in E2 neighboring domain is larger than or equal to MinPst2, and if $Pst2 \geq MinPst2$, it is determined that the object P to be visited is the core object; otherwise, it is further determined whether a number $Pst3$ of neighbor objects in the E3 neighboring domain of the object P to be visited is larger than or equal to MinPst3, and if $Pst3 \geq MinPst3$, it is determined that the object P to be visited is the core object; otherwise, it is determined that the object P to be visited is not the core object. The scanning radius may be set according to different characteristics of a data type of the object.

In step S300, the object to be visited is clustered into a first group, i.e., the object to be visited is treated as the first group.

A group number C is set for the object. In an initial state, the group number C is zero. Every time when one group is added, the group number corresponding to the added group increases by one. For example, if the object P is the core object, the object P is clustered into a first group and the group number C corresponding to the first group is updated to be one. If a core object Q which does not belong to the first group in which the object P is is found, the core object Q is clustered into a second group and the group number corresponding to the second group is updated to be two. In this way, the group number of the added group increases by one based on the group number of the existing group.

In step S400, an expanded clustering is performed on directly density-reachable neighbor objects in a predetermined neighboring domain of the object to be visited until no more neighbor objects are available to enter the first group.

The predetermined neighboring domain may be one or more of the plurality of neighboring domains of the object to be visited. For example, as shown in Fig. 3, if the bigger the scanning radius of the neighboring domain is, the lower the credibility of the neighboring domain is and the expanded clustering may only be performed on the objects in the neighboring domains having the high credibility. For example, in an exemplary embodiment of the present disclosure as shown in Fig. 3, the expanded clustering may only be performed on the neighbor objects in E1 neighboring domain and E2 neighboring domain of the object P to be visited. If each of the plurality of neighboring domains has a high credibility, the expanded clustering may be performed on the neighbor objects in each of the plurality of neighboring domains.

In an exemplary embodiment of the present disclosure as shown in Fig. 4, step S400 comprises following steps.

In step S401, each directly density-reachable neighbor object in the predetermined neighboring domain of the object to be visited is obtained, in which the scanning radius of the predetermined neighboring domain is less than a maximum scanning radius of the plurality of neighboring domains.

The bigger the scanning radius is, the greater the probability to bring in the noise dot will be. Thus, the directly density-reachable neighbor object in the predetermined neighboring domain is added into the first group in which the object to be visited is.

A queue NeihborPts of all the neighbor objects in the predetermined neighboring domain of the object P to be visited is obtained, and the distance between the object P to be visited and the neighbor object of the object P is calculated directly. Then, the distance is compared with the scanning radius of the predetermined domain. If the distance is larger than or equal to the scanning radius, it is indicated that the neighbor object is the object in the queue NeihborPts. The distance may be a cosine similarity or a Euclidean distance. It should be noted that when the cosine similarity between the two objects is used herein to show a distance relationship between two objects, a difference $(1-\cos\theta)$ between one and the cosine similarity is used to represent the distance between the two objects, in which the shorter the distance between the two objects is, the higher the similarity between the two objects is.

Alternatively, after the distance between each neighbor object and the object to be visited is obtained, the distances are sequenced according to a size of each distance. In this way, when the number of the objects in the neighboring domain is determined, according to an obtained distance sequence, the neighbor objects whose distance with respect to the object to be visited is less than the scanning radius of the predetermined neighboring domain are counted to form the queue NeighborPts.

In step S402, it is determined whether each directly density-reachable neighbor object is the core neighbor one by one.

The object $P_i$ in the queue NeighborPts is traversed and it is determined whether the object $P_i$ is the core object, in which a processing of determining whether the directly density-reachable neighbor object of the object to be visited is the core object is similar to that in step S200.

For each directly density-reachable neighbor object, it is determined whether at least one neighboring domain in which the number of the neighbor objects is larger than the predetermined value exists in the plurality of neighboring domains of the directly density-reachable neighbor object. If the number of the neighbor objects is larger than or equal to the predetermined value, the directly density-reachable neighbor object is determined as the core object. If the number of the neighbor objects in each of the plurality of neighboring domains of the directly density-reachable neighbor object is less than the predetermined value, the directly density-reachable neighbor object is not determined as the core object.

In step S403, if it is determined that the directly density-reachable neighbor object is the core object, the neighbor objects in the predetermined neighboring domain in which the directly density-reachable neighbor object is is added into the first group until no more neighbor objects are available to enter the first group.

During performing the expanded clustering, a queue is created to store the objects to be visited. For example, when the expanded clustering is performed on the object P to be visited, a queue is created and the directly density-reachable neighbor objects in the predetermined neighboring domain of the object P to be visited are added into the queue firstly, for example the queue is {P1, P2, P3, P4}. Firstly, it is determined whether P1 is the core object. If yes, the directly density-reachable neighbor objects in the predetermined neighboring domain of P1 are added into the first group in which P is and the directly density-reachable neighbor objects in the predetermined neighboring domain of P1 are added into the queue (stack data structure). A next object (such as P2) in the queue is visited, and the object (P2) is marked as visited and it is determined whether the object is the core object. If the object is not the core object, it is determined whether the object is a member of another group. If the object is not the member of the other group, the object is added into the first group in which the object P is. A next object in the queue is visited until no object is left in the queue.

In step S404, if the directly density-reachable neighbor object is not the core object, it is determined whether each directly density-reachable neighbor object has been determined. If not all the directly density-reachable neighbor objects have been determined, step S402 is executed and it is determined whether the next directly density-reachable neighbor object is the core object. If each directly density-reachable neighbor object has been determined, this expanded clustering is finished.

With the clustering method according to embodiments of the present disclosure, each neighbor object of the object to be visited is obtained, and it is determined that at least one neighboring domain in which the number of the neighbor projects is larger than the predetermined value exists and the object to be visited is determined as the core object. The object to be visited is clustered into the first group, and the expanded clustering is performed on directly density-reachable neighbor objects in the predetermined neighboring domain of the object to be visited. If the directly density-reachable neighbor object is not the core object, the expanded clustering is stopped and then the next object to be visited is determined until all the objects to be visited are clustered. Since the plurality of neighboring domains are used to determine whether the object to be visited is the core object in the clustering method, a limitation of Eps (scanning radius) and MinPts (minimum number of contained dots) is reduced. Thus, a sensibility of a clustering result to Eps and MinPts are decreased and an accuracy rate of the clustering result is improved.

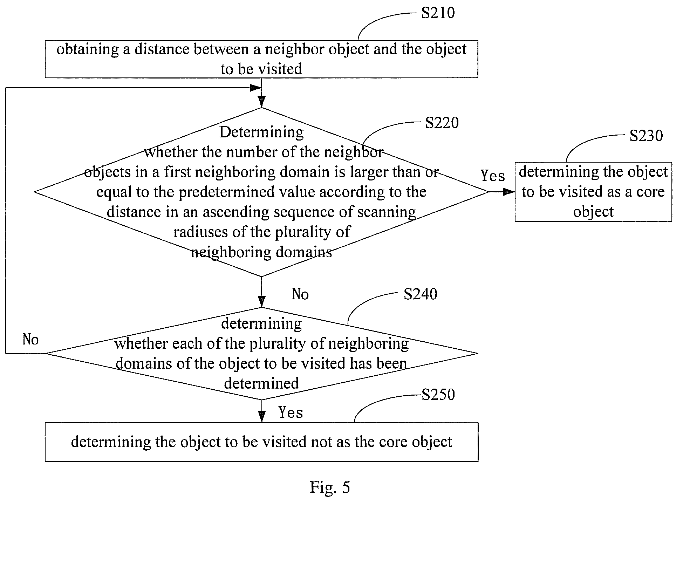

In an exemplary embodiment as shown in Fig. 5, step S200 in Fig. 1 comprises following steps.

In step S210, a distance between a neighbor object and the object to be visited is obtained. The distance may be the cosine similarity or the Euclidean distance.

It should be noted that the cosine similarity between two objects is used herein to show the distance relationship between the two objects, and a difference (1-cos$\theta$) between one and the cosine similarity is used to represent the distance between two objects, in which the shorter the distance between the two objects is, the higher the similarity between the two objects is.

In step S220, it is determined whether the number of the neighbor objects in a first neighboring domain is larger than or equal to the predetermined value according to the distance in an ascending sequence of scanning radiuses of the plurality of neighboring domains. If the number of the neighbor objects in the first neighboring domain is larger than or equal to the predetermined value, step S230 is executed; if the number of the neighbor objects in the first neighboring domain is less than the predetermined value, step S240 is executed.

Alternatively, after the distance between each neighbor object and the object to be visited is obtained, the distances are sequenced according to the size of each distance. In this way, when the number of the objects in the neighboring domain is determined, according to the obtained distance sequence, the number of the neighbor objects whose distance with respect to the object to be visited is less than the scanning radius of the neighboring domain is counted. Then, it is determined whether the number of the neighbor objects is larger than or equal to a corresponding predetermined threshold.

For example, as shown in Fig. 3, the number of objects in the E1 neighboring domain is determined firstly. The distances between the objects in E1 neighboring domain and the object P are sequenced according to the size of each distance to obtain the distance sequence. Firstly, the distance closest to the scanning radius E1 in the distance sequence may be determined according to a search method (such as a binary chop), and a number of the distances less than the distance closest to the scanning radius E1 in the distance sequence is counted so as to determine the number of the objects in E1 neighboring domain, thus improving a determination efficiency.

Moreover, if it is needed to continue to determine the number of neighbor objects in E2 neighboring domain, a number Pts21 of the neighbor objects whose distance with respect to the object P is less than the scanning radius E2 and larger than the scanning radius E1 by searching the distance sequence is counted and the number of the neighbor objects in E2 neighboring domain is obtained by adding Pts21 to Pts1. Similarly, a number Pts32 of the neighbor objects whose distance with respect to the object P is less than the scanning radius E3 and larger than the scanning radius E2 by searching the distance sequence is counted, and the number of the neighbor objects in E3 neighboring domain is obtained by adding Pts32 to a sum of Pts21 and Pts1. If there are more neighboring domains, the number of the neighbor objects in other neighboring domains may be obtained in this way.

It should be noted that, in the plurality of neighboring domains of the object P to be visited, the number of the neighbor objects is determined in the ascending sequence of scanning radiuses of the plurality of neighboring domains. If it is determined the number of the neighbor objects in a certain neighboring domain is larger than or equal to the predetermined value, it is not needed to continue determining the numbers of the neighbor objects in subsequent neighboring domains.

In step S230, the object to be visited is determined as a core object.

In step S240, it is determined whether each of the plurality of neighboring domains of the object to be visited has been determined. If not all the plurality of neighboring domains of the object to be visited have been determined, step S220 is then executed and it is further determined whether the number of the neighbor objects in a second neighboring domain is larger than or equal to the predetermined value according to the distance in the ascending sequence of scanning radiuses of the plurality of neighboring domains; and if each of the plurality of neighboring domains of the object to be visited has been determined, step S250 is executed.

For example, a variable i whose original value is zero may be set. When the first neighboring domain is determined, the variable i increases by one (i.e., i=i+1). It can be determined whether each of the plurality of neighboring domains of the object to be visited has been determined by comparing the variable i with the number of the plurality of neighboring domains of the object to be visited.

In step S250, it is determined the object to be visited is not the core object.

If it is determined that the object P to be visited is not the core object, the object P is the noise dot and the step of obtaining each neighbor object of a next object to be visited is executed until there is no object to be visited left.

With the method for determining whether the object is the core object according to embodiments of the present disclosure, the number of the neighbor objects in the neighboring domain is determined directly according the distance between the neighbor object and the object to be visited. If the number of the neighbor objects in a certain neighboring domain of the plurality of neighboring domains of the object to be visited is larger than or equal to the predetermined threshold, the object to be visited is the core object. In other words, a limitation of Eps (scanning radius) and MinPts (minimum number of contained dots) is reduced. Thus, a sensibility of a clustering result to Eps and MinPts are decreased and an accuracy rate of the clustering result is improved.

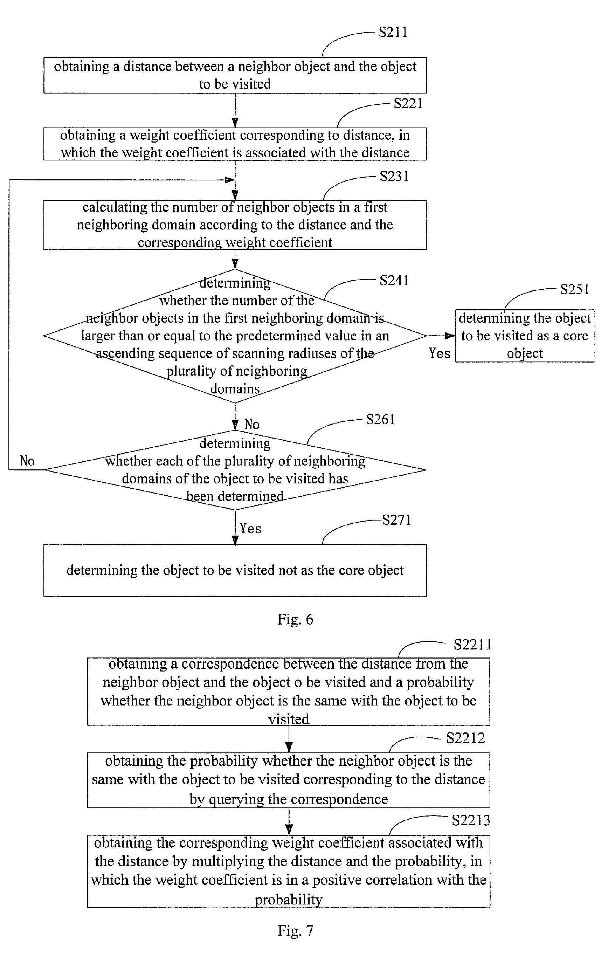

In another exemplary embodiment of the present disclosure as shown in Fig. 6, step S200 in Fig. 1 comprises following steps.

In step S211, the distance between a neighbor object and the object to be visited is obtained. The distance may be the cosine similarity or the Euclidean distance.

It should be noted that the cosine similarity between two objects is used herein to show the distance relationship between the two objects, and a difference $(1-\cos\theta)$ between one and the cosine similarity is used to represent the distance between two objects, in which the shorter the distance between the two objects is, the higher the similarity between the two objects is.

In step S221, a weight coefficient corresponding to the distance is obtained, in which the weight coefficient is associated with the distance and the similarity between two objects.

The weight coefficient can reflect the relationship between the distance between two objects and the similarity between the two objects. For example, the longer the distance is, the lower the similarity is and the smaller the corresponding weight coefficient is. On the contrary, the shorter the distance is, the higher the similarity is and the greater the corresponding weight coefficient is.

In an exemplary embodiment of the present disclosure, the weight coefficient may be determined by the distance between two objects and the probability whether the two objects are identical with each other. As shown in Fig. 7, the weight coefficient is obtained by following steps.

In step S2211, according to sample object statistics, a correspondence between the distance from the neighbor object and the object o be visited and a probability whether the neighbor object is the same with the object to be visited is obtained.

The distance (such as the cosine similarity or the Euclidean distance) between two objects is obtained. The two objects are supposed to be A and B respectively, and the cosine similarity between the two objects can be calculated according to formula (1):

$$\cos\theta = \frac{A \bullet B}{\|A\|\|B\|} \qquad (1)$$

where A • B is an inner product of vector A and vector B, $|A|$ is a length of vector A, $|B|$ is a length of vector B.

For example, in a face recognition, the cosine similarity $\cos\theta$ between two facial images calculated according to a high-dimensional feature is in a range of [0,1]. According to a large scale of facial image statistic data, if the cosine similarity is in a range of [0.4,1], the probability whether the two objects are identical with each other is 98%; if the cosine similarity is in a range of [0.35, 0.4], the probability whether the two objects are identical with each other is 90%; if the cosine similarity is in a range of [0.35, 0.4], the probability whether the two objects are identical with each other is 90%; if the cosine similarity is in a range of [0.3, 0.35], the probability whether the two objects are identical with each other is 70%; if the cosine similarity is in a range of [0.25, 0.3], the probability whether the two objects are identical with each other is 40%; if the cosine similarity is in a range of [0, 0.25], the probability whether the two objects are identical with each other is 10%.

According to the above statistical results, the relationship between the distance between two objects and the probability whether the two objects are identical with each other can be obtained. The relationship may be stored in a table or in other forms.

In step S2212, obtaining the probability whether the neighbor object is the same with the object to be visited corresponding to the distance by querying the correspondence.

In step S2213, the corresponding weight coefficient associated with the distance is obtained by multiplying the distance and the probability, in which the weight coefficient is in a positive correlation with the probability.

According to the statistical results in step S2211, the relationship between the weight coefficient and the cosine similarity may be denoted as formula (2):

$$W(d) = \begin{cases} 1*\cos\theta, & if \ \cos\theta \geq 0.45 \\ 0.7*\cos\theta, & if \ 0.35 \leq \cos\theta \leq 0.45 \\ 0.4*\cos\theta, & if \ 0.25 \leq \cos\theta \leq 0.35 \\ 0.1*\cos\theta, & if \ 0.15 \leq \cos\theta \leq 0.25 \\ 0.001*\cos\theta, & if \ \cos\theta < 0.15 \end{cases} \qquad (2)$$

Formula (2) represents a relationship between the cosine similarity and the probability whether the two objects are a same person. For other types of distances, a relationship expression may be summarized and deduced according to relationship between the distance and the corresponding probability, which is omitted herein.

Certainly, the weight coefficient may be obtained by other means, as long as the weight coefficient can represent the relation between the distance between two objects and the similarity between the two objects.

In step S231, the number of the neighbor objects in the specified neighboring domain is calculated according to the weight coefficient and the distance.

Alternatively, after the distance between each neighbor object and the object to be visited is obtained, the distances may be sequenced according to the size of each distance. In this way, when the number of the objects in the neighboring domain is determined, the number of the neighbor objects whose distance with respect to the object to be visited is less than the scanning radius of the neighboring domain is counted according to the distance sequence. Then, according to the distance between the neighbor object in the specified neighboring domain and the object to be visited, and the corresponding weight coefficient, the number of the neighbor objects in the E neighboring domain is obtained.

The specified neighboring domain may be any one of the plurality of the neighboring domains of the object to be visited and may be changed in the ascending sequence of scanning radiuses of the plurality of neighboring domains.

According to the weight coefficient in formula (2), the number of the neighbor objects can be represented as formula (3):

$$\text{Pts} = \sum_{i \in E} W\left(d_i\right) \tag{3}$$

Formula (3) represents a total number of all the objects in the E neighboring domain. In fact, the number of each object is changed from one to the weight coefficient $W\left(d_i\right)$ corresponding to the distance between the object and the object to be visited. In other words, instead of just calculating the number of the objects in the E neighboring domain, it is obtained that the closer the object is to center point, the bigger a conversion proportion of the number of the object is; on the contrary, the farther the object is away from the center point, the less the conversion proportion of the number of the object is.

In step S241, it is determined whether the number of the neighbor objects in the neighboring domain of the object to be visited is larger than or equal the corresponding predetermined threshold. If yes, step S251 is executed; if not, step S261 is executed.

The predetermined threshold which is different from the predetermined threshold in Fig. 5 may be adjusted according to the weight coefficient. Moreover, the predetermined threshold in the exemplary embodiment of the present disclosure is less than the predetermined threshold in Fig. 5.

It is determined whether the number of objects in each neighboring domain satisfies a corresponding threshold requirement in turn according to the scanning radiuses. If yes, the number of the objects in the next neighboring domain will be determined.

In step S251, if the number of the neighbor objects in the neighboring domain is larger than or equal to the predetermined threshold, the object to be visited is determined as the core object.

In step S261, if the number of the neighbor objects in the neighboring domain is less than the predetermined threshold, it is determined whether each of the plurality of neighboring domains of the object to be visited has been determined. If yes, step S271 is executed; if not, step S231 is then executed and the number of neighbor objects in the next neighboring domain of the object to be visited is calculated according to the weight coefficient and the distance.

For example, the variable i whose original value is zero may be set. When the first neighboring domain is determined, the variable i increases by one (i.e., i=i+1). It can be determined whether each of the plurality of neighboring domains of the object to be visited has been determined by comparing the variable i with the number of the plurality of neighboring domains of the object to be visited, in which the scanning radius of the $i^{th}$ neighboring domain is less than the scanning radius of the $(i+1)^{th}$ neighboring domain.

If each of the plurality of neighboring domains of the object to be visited has been determined, in step S271, the object to be visited is not determined as the core object.

If it is determined that the object P to be visited is not the core object, the object P is the noise dot, the object to be visited is marked as visited and the step of obtaining each neighbor object of the next object to be visited is executed until there is no object to be visited left.

With the method for determining whether the object to be visited is the core object, the number of the neighbor object is converted according to the weight coefficient corresponding to the distance between the neighbor object and the object to be visited, such that the neighbor object close to the center point has the big conversion proportion of the number and has a great contribution to the number of the neighbor objects in the neighboring domain; on the contrary, the neighbor object far away from the center point has the low conversion proportion of the number and has a small contribution to the number of the neighbor objects in the neighboring domain, thus further reducing the sensibility of the clustering result to Eps and MinPts and improving the accuracy rate of the clustering result.

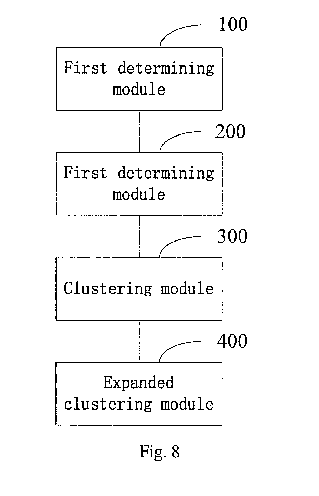

Fig. 8 is a schematic diagram of clustering apparatus according to an exemplary embodiment of the present disclosure. With reference to Fig. 8, the apparatus comprises a first obtaining module 100, a first judging module 200, a clustering module 300 and an expanded clustering module 400.

The first obtaining module 100 is configured to obtain each neighbor object of the object to be visited.

The first judging module 200 is configured to determine whether at least one neighboring domain in which the number of the neighbor projects is larger than or equal to the predetermined value exists, in which the object to be visited has the plurality of neighboring domains.

With reference to the schematic diagram of a neighboring domain distribution in Fig. 3, the first judging module 200 determines whether the number Pst1 of neighbor objects in E1 neighboring domain of the object P to be visited is larger than or equal to MinPst1 first, if Pst1≥MinPst1, if Pst1≥MinPst1, the first judging module 200 determines that the object P to be visited is the core object; otherwise, the first judging module 200 further determines whether the number Pst2 of neighbor objects in E2 neighboring domain of the object P to be visited is larger than or equal to MinPst2, if Pst2≥MinPst2, the first judging module 200 determines that the object P to be visited is the core object; otherwise, the first judging module 200 further determines whether the number Pst3 of neighbor objects of the object P to be visited in the E3 neighboring domain is larger than or equal to MinPst3, if Pst3≥MinPst3, the first judging module 200 determines that the object P to be visited is the core object; otherwise, the first judging module 200 determines that the object P to be visited is not the core object.

The clustering module 300 is configured to cluster the object to be visited into the first group, if it is determined that the at least one neighboring domain in which the number of the neighbor projects is larger than the predetermined value exists.

The expanded clustering module 400 is configured to perform the expanded clustering on directly density-reachable neighbor objects in the predetermined neighboring domain of the object to be visited until no more neighbor objects are available to enter the first group.

In an exemplary embodiment of the present disclosure, the expanded clustering module may comprise a fifth obtaining sub-module, a fifth judging sub-module and an expanded clustering sub-module.

The fifth obtaining sub-module is configured to obtain each directly density-reachable neighbor object in the predetermined neighboring domain of the object to be visited, in which the scanning radius of the predetermined neighboring domain is less than the maximum scanning radius of the plurality of neighboring domains.

The bigger the scanning radius is, the greater the probability to bring in the noise dot will be. Thus, the directly density-reachable neighbor object in the predetermined neighboring domain is added into the first group in which the object to be visited is.

The fifth judging sub-module is configured to determine whether each directly density-reachable neighbor object is the core neighbor one by one.

The expanded clustering sub-module is configured to add the neighbor objects in the predetermined neighboring domain in which the directly density-reachable neighbor object is into the first group until no more neighbor objects are available to enter the first group, if it is determined that the directly density-reachable neighbor object is the core object.

In an exemplary embodiment of the present disclosure, the fifth judging sub-module may comprise: a sixth judging sub-module, a fifth determining sub-module and a sixth determining sub-module.

The sixth judging sub-module is configured to determine whether at least one neighboring domain in which the number of the neighbor objects is larger than the predetermined value exists in a plurality of neighboring domains of the directly density-reachable neighbor object.

The fifth determining sub-module is configured to determine the directly density-reachable neighbor object as the core object, if the number of the neighbor objects is larger than or equal to the predetermined value.

The sixth determining sub-module is configured to determine the directly density-reachable neighbor object not as the core object, if the number of the neighbor objects in each of the plurality of neighboring domains of the directly density-reachable neighbor object is less than the predetermined value.

With the clustering apparatus according to embodiments of the present disclosure, the first judging module determines whether at least one neighboring domain in which the number of the neighbor projects is larger than or equal to a predetermined value exists, i.e., the first judging module determines whether the object to be visited is the core object; if the object to be visited is the core object, the clustering module clusters the object to be visited into the first group; the expanded clustering module performs the expanded clustering on directly density-reachable neighbor objects in the predetermined neighboring domain of the object to be visited; if the directly density-reachable neighbor object is the core object, the neighbor objects in the predetermined neighboring domain in which the directly density-reachable neighbor object is is added into the first group; if the directly density-reachable neighbor object is not the core object, the expanded clustering is stopped. Then the next object to be visited is determined until no more neighbor objects are available to enter the first group. Since the plurality of neighboring domains are used to determine whether the object to be visited is the core object in the clustering apparatus, the limitation of Eps (scanning radius) and MinPts (minimum number of contained dots) is reduced. Thus, the sensibility of the clustering result to Eps and MinPts is decreased and an accuracy rate of the clustering result is improved.

In an exemplary embodiment of the present disclosure as shown in Fig. 7, the first judging module comprises a first obtaining sub-module, a first judging sub-module, a first determining sub-module, a second judging sub-module and a second determining sub-module.

The first obtaining sub-module is configured to obtain the distance between the neighbor object and the object to be visited.

The first judging sub-module is configured to determine whether the number of the neighbor objects in the first neighboring domain is larger than or equal to the predetermined value according to the distance in an ascending sequence of scanning radiuses of the plurality of neighboring domains.

Alternatively, after the distance between each neighbor object and the object to be visited is obtained, the distances are sequenced according to the size of each distance. In this way, when the number of the objects in the neighboring domain is determined, according to the obtained distance sequence, the number of the neighbor objects whose distance with respect to the object to be visited is less than the scanning radius of the neighboring domain is counted. Then, it is determined whether the number of the neighbor objects is larger than or equal to a corresponding predetermined threshold.

The first determining sub-module is configured to determine the object to be visited as the core object, if the number of the neighbor objects in the first neighboring domain is larger than or equal to the predetermined value.

The second judging sub-module is configured to determine whether each of the plurality of neighboring domains of the object to be visited has been determined, if the number of the neighbor objects in the first neighboring domain is less than the predetermined value, to make the first judging sub-module to determine whether the number of the neighbor objects in the second neighboring domain is larger than or equal to the predetermined value according to the distance in the ascending sequence of scanning radiuses of the plurality of neighboring domains, if not all the plurality of neighboring domains of the object to be visited have been determined.

The second determining sub-module is configured to determine the object to be visited not as the core object, to mark the object to be visited as visited and to control the first obtaining module to obtain each neighbor object of the next object to be visited, if each of the plurality of neighboring domains of the object to be visited has been determined.

With the first judging module according to embodiments of the present disclosure, the number of the neighbor objects in the neighboring domain is determined directly according to the distance between the neighbor object and the object to be visited, if the number of the neighbor objects in a certain one of the plurality of the neighboring domains of the object to be visited is larger than or equal to the predetermined threshold, the object to be visited is the core object. In other words, the limitation of Eps (scanning radius) and MinPts (minimum number of contained dots) is reduced. Thus, the sensibility of the clustering result to Eps and MinPts is decreased and the accuracy rate of the clustering result is improved.

In an exemplary embodiment of the present disclosure, in order to improve the determination efficiency, the first judging sub-module comprises a sequencing module, a second counting sub-module and a seventh judging sub-module.

The sequencing module is configured to sequence the distances between each neighbor object and the object to be visited and to obtain a sequence of the distances.

The second counting sub-module is configured to count the number of the neighbor objects having the distance with respect to the object to be visited less than the scanning radius of the neighboring domain according to the sequence of the distances.

The seventh judging sub-module is configured to determine whether the number of the neighbor objects having the distance with respect to the object to be visited less than the scanning radius of the neighboring domain is less than or equal to the predetermined value.

With the first judging sun-module according to embodiments of the present disclosure, the sequencing module sequences the distances between each object in a certain neighboring domain and the object to be visited and obtains the sequence of the distances. Then, the distance closest to the scanning radius in the distance sequence is determined according to the search method (such as the binary chop), and the number of the distances less than the distance closest to the scanning radius is counted so as to determine the number of the objects in the certain neighboring domain, thus improving the determination efficiency.

In another exemplary embodiment of the present disclosure as shown in Fig. 7, the first judging module 200 comprises a second obtaining sub-module, a third obtaining sub-module, a calculating sub-module, a third judging sub-module, a third determining sub-module, a fourth judging sub-module and a fourth determining sub-module.

The second obtaining sub-module is configured to obtain the distance between the neighbor object and the object to be visited.

The third obtaining sub-module is configured to obtain the weight coefficient corresponding to the distance, in which the weight coefficient is associated with the distance.

The weight coefficient can reflect the relationship between the distance between two objects and the similarity between the two objects. For example, the longer the distance is, the lower the similarity is and the smaller the corresponding weight coefficient is. On the contrary, the shorter the distance is, the higher the similarity is and the greater the corresponding weight coefficient is.

In an exemplary embodiment of the present disclosure, the third obtaining sub-module comprises a counting sub-module, a querying sub-module and a fourth obtaining module.

The counting sub-module is configured to obtain the correspondence between the distance from the neighbor object and the object o be visited and the probability whether the neighbor object is the same with the object to be visited.

The querying sub-module is configured to query the correspondence to obtain the probability whether the neighbor object is the same with the object to be visited corresponding to the distance.

The fourth obtaining module is configured to obtain the corresponding weight coefficient associated with the distance by multiplying the distance and the probability, in which the weight coefficient is in the positive correlation with the probability.

The calculating sub-module is configured to calculate the number of the neighbor objects in the neighboring domain according to the weight coefficient and the distance. Alternatively, after the distance between each neighbor object and the object to be visited is obtained, the distances may be sequenced according to the size of each distance. In this way, when the number of the objects in the neighboring domain, according to the distance sequence, the number of the neighbor objects whose distance with respect to the object to be visited is less than the scanning radius of the neighboring domain is counted. Then, according to the distance between the neighbor object in the specified neighboring domain and the object to be visited, and the corresponding weight coefficient, the number of the neighbor objects in the E neighboring domain is obtained.

The third judging sub-module is configured to determine whether the number of the neighbor objects in the first neighboring domain is larger than or equal to the predetermined value in the ascending sequence of scanning radiuses of the plurality of neighboring domains.

The third determining sub-module is configured to determine the object to be visited as the core object, if the number of the neighbor objects in the first neighboring domain is larger than or equal to the predetermined value.

The fourth judging sub-module is configured to determine whether each of the plurality of neighboring domains of the object to be visited has been determined, if the number of the neighbor objects in the first neighboring domain is less than the predetermined value, to make the calculating sub-module to calculate the number of the neighbor objects in the second neighboring domain according to the distance and the corresponding weight coefficient, if not all the plurality of neighboring domains of the object to be visited have been determined; furthermore, the third judging sub-module determines the number of the neighbor objects in the second neighboring domain is larger than or equal to the predetermined value.

The fourth determining sub-module is configured to determine the object to be visited not as the core object, to mark the object to be visited as visited and to control the first obtaining module to obtain each neighbor object of the next object to be visited, if each of the plurality of neighboring domains of the object to be visited has been determined.

With the method for determining whether the object to be visited is the core object, the number of the neighbor object is converted according to the weight coefficient corresponding to the distance between the neighbor object and the object to be visited, such that the neighbor object close to the center point has the big conversion proportion of the number and has a great contribution to the number of the neighbor objects in the neighboring domain; on the contrary, the neighbor object far away from the center point has the low conversion proportion of the number and has a small contribution to the number of the neighbor objects in the neighboring domain, thus further reducing the sensibility of the clustering result to Eps and MinPts and improving the accuracy rate of the clustering result.

As for the apparatus in above embodiments, a mode of each module to perform operations has been described in the embodiments of the related method in details and is omitted herein.

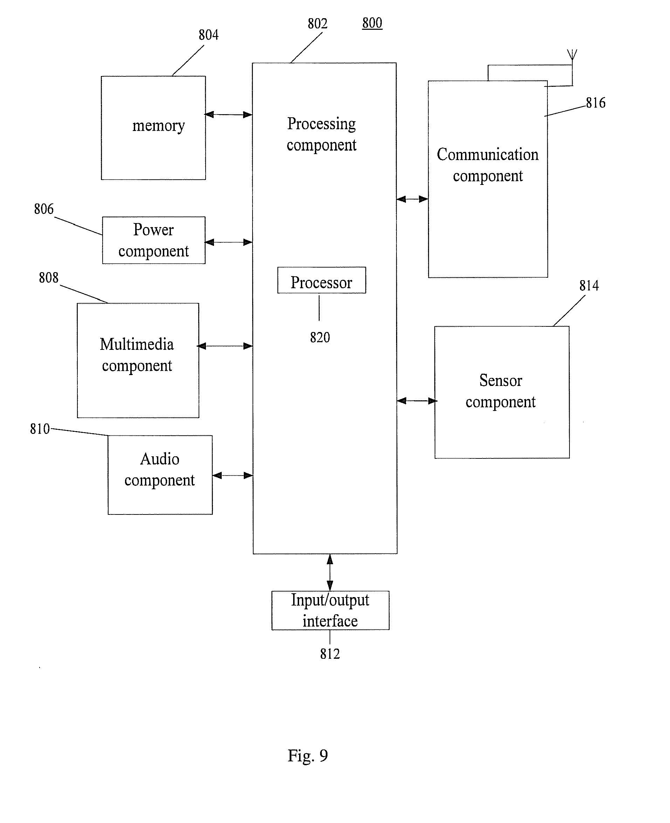

Fig. 9 is a block diagram of a clustering apparatus 800, according to an exemplary embodiment. For example, the apparatus 800 may be a mobile phone, a computer, a digital broadcast terminal, a messaging device, a gaming console, a tablet, a medical device, exercise equipment, a personal digital assistant, and the like.

Referring to Fig. 9, the apparatus 800 may comprise one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the apparatus 800, such as the operations associated with display, telephone calls, data communications, camera operations, and recording operations. The processing component 802 may comprise one or more processors 820 to execute instructions to perform all or part of the steps in the above described methods. Moreover, the processing component 802 may comprise one or more modules which facilitate the interaction between the processing component 802 and other components. For instance, the processing component 802 may comprise a multimedia module to facilitate the interaction between the multimedia component 808 and the processing component 802.

The memory 804 is configured to store various types of data to support the operation of the apparatus 800. Examples of such data include instructions for any applications or methods operated on the apparatus 800, contact data, phonebook data, messages, pictures, video, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the apparatus 800. The power component 806 may comprise a power management system, one or more power sources, and any other components associated with the generation, management, and distribution of power in the apparatus 800.

The multimedia component 808 comprises a screen providing an output interface between the apparatus 800 and the user. In some embodiments, the screen may comprise a liquid crystal display (LCD) and a touch panel (TP). If the screen comprises the touch panel, the screen may be implemented as a touch screen to receive input signals from the user. The touch panel comprises one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 808 comprises a front camera and/or a rear camera. The front camera and the rear camera may receive an external multimedia datum while the apparatus 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 comprises a microphone (MIC) configured to receive an external audio signal when the apparatus 800 is in an operation mode, such as a call mode, a recording mode, and a voice recognition mode. The received audio signal may be further stored in the memory 804 or transmitted via the communication component 816. In some embodiments, the audio component 810 further comprises a speaker to output audio signals.

The I/O interface 812 provides an interface between the processing component 802 and peripheral interface modules, such as a keyboard, a click wheel, buttons, and the like. The buttons may comprise, but are not limited to, a home button, a volume button, a starting button, and a locking button.

The sensor component 814 comprises one or more sensors to provide status assessments of various aspects of the apparatus 800. For instance, the sensor component 814 may detect an open/closed status of the apparatus 800, relative positioning of components, e.g., the display and the keypad, of the apparatus 800, a change in position of the apparatus 800 or a component of the apparatus 800, a presence or absence of user contact with the apparatus 800, an orientation or an acceleration/deceleration of the apparatus 800, and a change in temperature of the apparatus 800. The sensor component 814 may comprise a proximity sensor configured to detect the presence of nearby objects without any physical contact. The sensor component 814 may also comprise a light sensor, such as a CMOS or CCD image sensor, for use in imaging applications. In some embodiments, the sensor component 814 may also comprise an accelerometer sensor, a gyroscope sensor, a magnetic sensor, a pressure sensor, or a temperature sensor.

The communication component 816 is configured to facilitate communication, wired or wirelessly, between the apparatus 800 and other devices. The apparatus 800 can access a wireless network based on a communication standard, such as WiFi, 2G, or 3G, or a combination thereof. In one exemplary embodiment, the communication component 816 receives a broadcast signal or broadcast associated information from an external broadcast management system via a broadcast channel. In one exemplary embodiment, the communication component 816 further comprises a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the apparatus 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium comprising instructions, such as comprised in the memory 804, executable by the processor 820 in the apparatus 800, for performing the above-described methods. For example, the non-transitory computer-readable storage medium may be a ROM, a RAM, a CD-ROM, a magnetic tape, a floppy disc, an optical data storage device, and the like.

A non-transit computer-readable storage medium is provided, in which when the instructions in the storage medium are executed by the processor of a mobile terminal, the mobile terminal can execute a clustering method, comprising:

obtaining each neighbor object of an object to be visited;

determining whether at least one neighboring domain in which a number of the neighbor objects is larger than or equal to a predetermined value exists, wherein the object to be visited has a plurality of neighboring domains;

clustering the object to be visited into a first group, if it is determined that the at least one neighboring domain in which the number of the neighbor projects is larger than the predetermined value exists; and

performing an expanded clustering on directly density-reachable neighbor objects in a predetermined neighboring domain of the object to be visited until no more neighbor objects are available to enter the first group.

A computer program is provided, which when executing on a processor, performs a clustering method provided by above embodiments of the present disclosure.

It should be noted relational terms herein such as "first" and "second" are just intended to distinguish an entity or operation from another entity or operation, but not to imply any relationship or sequence between these entities or operations. Moreover, terms such as "include"; "comprise" or other variants are intended to cover a non-exclusive meaning, such that the process, method, object or apparatus including a series of elements may further include other elements which are not outlined definitely or include inherent elements of the process, method, object or apparatus. Unless specified otherwise, an element limited by a sentence "comprises a/an..." does not rule out the possibility that the process, method, object or apparatus including the element may further include other identical elements.

The above are only embodiments of the present disclosure and are intended to help those skilled in the related art to understand or implement the present disclosure. Various modifications of those embodiments are apparent for those skilled in the related art and the general principle defined herein may be performed in other embodiments without departing from spirit and scope of the present disclosure. Therefore, the present disclosure will not be limited to those embodiments herein, but claim the widest scope in conformance with the principle and novel characteristics of the present disclosure.

## Claims

1.  A clustering method, comprising:

    obtaining (S100) each neighbor object of an object to be visited;

    determining (S200) whether at least one neighboring domain in which a number of the neighbor objects is larger than or equal to a predetermined value exists, wherein the object to be visited has a plurality of neighboring domains;

    clustering (S300) the object to be visited into a first group, if it is determined that the at least one neighboring domain in which the number of the neighbor projects is larger than the predetermined value exists; and

    performing (S400) an expanded clustering on directly density-reachable neighbor objects in a predetermined neighboring domain of the object to be visited until no more neighbor objects are available to enter the first group.

2.  The method according to claim 1, wherein determining (S200) whether at least one neighboring domain in which a number of the neighbor objects is larger than or equal to a predetermined value exists comprises:

    obtaining (S211) a distance between a neighbor object and the object to be visited;

    determining (S241) whether the number of the neighbor objects in a first neighboring domain is larger than or equal to the predetermined value according to the distance in an ascending sequence of scanning radiuses of the plurality of neighboring domains;

    determining (S251) the object to be visited as a core object, if the number of the neighbor objects in the first neighboring domain is larger than or equal to the predetermined value;

    determining (S261) whether each of the plurality of neighboring domains of the object to be visited has been determined, if the number of the neighbor objects in the first neighboring domain is less than the predetermined value;

    determining whether the number of the neighbor objects in a second neighboring domain is larger than or equal to the predetermined value according to the distance in the ascending sequence of scanning radiuses of the plurality of neighboring domains, if not all the plurality of neighboring domains of the object to be visited have been determined; and

    determining (S271) the object to be visited not as the core object, if each of the plurality of neighboring domains of the object to be visited has been determined.

3.  The method according to claim 2, wherein determining whether at least one neighboring domain in which a number of the neighbor objects is larger than or equal to a predetermined value exists comprises:

obtaining (S221) a weight coefficient corresponding to distance, in which the weight coefficient is associated with the distance;

calculating (S231) the number of neighbor objects in a first neighboring domain according to the distance and the corresponding weight coefficient;

4. The method according to claim 3, wherein obtaining (S221) a corresponding weight coefficient associated with the distance comprises:

obtaining (S2211) a correspondence between the distance from the neighbor object and the object o be visited and a probability whether the neighbor object is the same with the object to be visited;

obtaining (S2212) the probability whether the neighbor object is the same with the object to be visited corresponding to the distance by querying the correspondence; and

obtaining (S2213) the corresponding weight coefficient associated with the distance by multiplying the distance and the probability, in which the weight coefficient is in a positive correlation with the probability.

5. The method according to any one of claims 1-4, wherein performing (S400) an expanded clustering on directly density-reachable neighbor objects in a predetermined neighboring domain of the object to be visited until no more neighbor objects enter the first group comprises:

obtaining (S401) each directly density-reachable neighbor object in the predetermined neighboring domain of the object to be visited, in which the scanning radius of the predetermined neighboring domain is less than a maximum scanning radius of the plurality of neighboring domains;

determining (S402) whether each directly density-reachable neighbor object is the core neighbor one by one;

adding (S403) the neighbor objects in the predetermined neighboring domain in which the directly density-reachable neighbor object is into the first group until no more neighbor objects are available to enter the first group, if it is determined that the directly density-reachable neighbor object is the core object.

6. The method according to claim 5, wherein determining (S402) whether each directly density-reachable neighbor objects are the core neighbors one by one comprises:

determining whether at least one neighboring domain in which the number of the neighbor objects is larger than the predetermined value exists in the plurality of neighboring domains of the directly density-reachable neighbor object;

determining the directly density-reachable neighbor object as the core object, if the number of the neighbor objects is larger than or equal to the predetermined value; and

determining the directly density-reachable neighbor object not as the core object, if the number of the neighbor objects in each of the plurality of neighboring domains of the directly density-reachable neighbor object is less than the predetermined value.

7. The method according to claim 2, wherein determining (S241) whether the number of the neighbor objects in a first neighboring domain is larger than or equal to the predetermined value according to the distance in an ascending sequence of scanning radiuses of the plurality of neighboring domains comprises:

sequencing the distances between each neighbor object and the object to be visited and obtaining a sequence of the distances;

counting a number of the neighbor objects having the distance with respect to the object to be visited less than the scanning radius of the neighboring domain according to the sequence of the distances; and

determining whether the number of the neighbor objects having the distance with respect to the object to be visited less than the scanning radius of the neighboring domain is less than or equal to the predetermined value.

8. A clustering apparatus, comprising:

a first obtaining module (100), configured to obtain each neighbor object of an object to be visited;

a first judging module (200), configured to determine whether at least one neighboring domain in which a number of the neighbor projects is larger than or equal to a predetermined value exists, wherein the object to be visited has a plurality of neighboring domains;

a clustering module (300), configured to cluster the object to be visited into a first group, if it is determined that the at least one neighboring domain in which the number of the neighbor projects is larger than the predetermined value exists; and

an expanded clustering module (400), configured to perform an expanded clustering on directly density-reachable neighbor objects in a predetermined neighboring domain of the object to be visited until no more neighbor objects are available to enter the first group.

9. The apparatus according to claim 8, wherein the first judging module (200) comprises:

a first obtaining sub-module, configured to obtain a distance between a neighbor object and the object to be visited;

a first judging sub-module, configured to determine whether the number of the neighbor objects in a first neighboring domain is larger than or equal to the predetermined value according to the distance in an ascending sequence of scanning radiuses of the plurality of neighboring domains;

a first determining sub-module, configured to determine the object to be visited as a core object, if the number of the neighbor objects in the first neighboring domain is larger than or equal to the predetermined value;

a second judging sub-module, configured to determine whether each of the plurality of neighboring domains of the object to be visited has been determined, if the number of the neighbor objects in the first neighboring domain is less than the predetermined value, to make the first determining sub-module to determine whether the number of the neighbor objects in a second neighboring domain is larger than or equal to the predetermined value according to the distance in the ascending sequence of scanning radiuses of the plurality of neighboring domains, if not all the plurality of neighboring domains of the object to be visited have been determined; and

a second determining sub-module, configured to determine the object to be visited not as the core object, if each of the plurality of neighboring domains of the object to be visited has been determined.

10. The apparatus according to claim 8, wherein the first judging module (200) comprises:

a second obtaining sub-module, configured to obtain a distance between a neighbor object and the object to be visited;

a third obtaining sub-module, configured to obtain a weight coefficient corresponding to the distance, in which the weight coefficient is associated with the distance;

a calculating sub-module, configured to calculate the number of neighbor objects in a first neighboring domain according to the distance and the corresponding weight coefficient;

a third judging sub-module, configured to determine whether the number of the neighbor objects in the first neighboring domain is larger than or equal to the predetermined value in an ascending sequence of scanning radiuses of the plurality of neighboring domains;

a third determining sub-module, configured to determine the object to be visited as a core object, if the number of the neighbor objects in the first neighboring domain is larger than or equal to the predetermined value;

a fourth judging sub-module, configured to determine whether each of the plurality of neighboring domains of the object to be visited has been determined, if the number of the neighbor objects in the first neighboring domain is less than the predetermined value, to make the calculating sub-module to calculate the number of the neighbor objects in a second neighboring domain according to the distance and the corresponding weight coefficient, if not all the plurality of neighboring domains of the object to be visited have been determined; and

a fourth determining sub-module, configured to determine the object to be visited not as the core object, if each of the plurality of neighboring domains of the object to be visited has been determined.

11. The apparatus according to claim 10, wherein the third obtaining sub-module comprises:

a counting sub-module, configured to obtain a correspondence between the distance from the neighbor object to the object o be visited and a probability whether the neighbor object is the same with the object to be visited;

a querying sub-module, configured to query the correspondence to obtain the probability whether the neighbor object is the same with the object to be visited corresponding to the distance; and

a fourth obtaining module, configured to obtain the corresponding weight coefficient associated with the distance by multiplying the distance and the probability, in which the weight coefficient is in a positive correlation with the probability.

12. The apparatus according to any one of claims 8-11, wherein the expanded clustering module (400) comprises:

a fifth obtaining sub-module, configured to obtain each directly density-reachable neighbor object in the predetermined neighboring domain of the object to be visited, in which the scanning radius of the predetermined neighboring domain is less than a maximum scanning radius of the plurality of neighboring domains;

a fifth judging sub-module, configured to determine whether each directly density-reachable neighbor object is the core neighbor one by one; and

an expanded clustering sub-module, configured to add the neighbor objects in the predetermined neighboring domain in which the directly density-reachable neighbor object is into the first group until no more neighbor objects are available to enter the first group, if it is determined that the directly density-reachable neighbor object is the core object.

13. A terminal apparatus, comprising:

a processor (820); and

a memory (804) configured to store an executable instruction by the processor (820);

wherein the processor (820) is configured to

obtain each neighbor objects of an object to be visited;

determine whether at least one neighboring domain in which a number of the neighbor objects is larger than or equal to a predetermined value exists, wherein the object to be visited has a plurality of neighboring domains of the object to be visited;

cluster the object to be visited into a first group, if it is determined that the at least one neighboring domain in which the number of the neighbor projects is larger than the predetermined value exists in the plurality of neighboring domains of the object to be visited; and

perform an expanded clustering on directly density-reachable neighbor objects in a predetermined neighboring domain of the object to be visited until no more neighbor objects are available to enter the first group.

14. A computer program including instructions for executing the steps of a clustering method according to any one of claims 1 to 7 when said program is executed by a computer.

15. A recording medium readable by a computer and having recorded thereon a computer program including instructions for executing the steps of a clustering method according to any one of claims 1 to 7.

S100

obtaining each neighbor object of an object to be visited

S200

Determining whether at least one neighboring domain in which a number of the neighbor objects is larger than or equal to a predetermined value exists

No

Yes

S300

clustering the object to be visited into a first group

S400

performing an expanded clustering on directly density-reachable neighbor objects in a predetermined neighboring domain of the object to be visited until no more neighbor objects are available to enter the first group

Fig. 1

Fig. 2

Fig. 3

S401

obtaining each directly density-reachable neighbor object in the predetermined neighboring domain of the object to be visited, in which the scanning radius of the predetermined neighboring domain is less than a maximum scanning radius of the plurality of neighboring domains

S402

determining whether each directly density-reachable neighbor object is the core neighbor one by one

Yes

No

S404

determining whether each directly density-reachable neighbor object has been determined

No

Yes

End

S403

adding the neighbor objects in the predetermined neighboring domain in which the directly density-reachable neighbor object is into the first group until no more neighbor objects are available to enter the first group

Fig. 4

S210

obtaining a distance between a neighbor object and the object
to be visited

S220

Determining
whether the number of the neighbor
objects in a first neighboring domain is larger than or
equal to the predetermined value according to the
distance in an ascending sequence of scanning
radiuses of the plurality of
neighboring domains

Yes

S230

determining the object
to be visited as a core
object

No

S240

determining
whether each of the plurality of neighboring
domains of the object to be visited has been
determined

No

Yes

S250

determining the object to be visited not as the core object

Fig. 5

S211

obtaining a distance between a neighbor object and the object to be visited

S221

obtaining a weight coefficient corresponding to distance, in which the weight coefficient is associated with the distance

S231

calculating the number of neighbor objects in a first neighboring domain according to the distance and the corresponding weight coefficient

S241

determining whether the number of the neighbor objects in the first neighboring domain is larger than or equal to the predetermined value in an ascending sequence of scanning radiuses of the plurality of neighboring domains

Yes → S251

determining the object to be visited as a core object

No

S261

determining whether each of the plurality of neighboring domains of the object to be visited has been determined

No

Yes

S271

determining the object to be visited not as the core object

Fig. 6

S2211

obtaining a correspondence between the distance from the neighbor object and the object o be visited and a probability whether the neighbor object is the same with the object to be visited

S2212

obtaining the probability whether the neighbor object is the same with the object to be visited corresponding to the distance by querying the correspondence

S2213

obtaining the corresponding weight coefficient associated with the distance by multiplying the distance and the probability, in which the weight coefficient is in a positive correlation with the probability

Fig. 7

Fig. 8

Fig. 9